# EUROPÄISCHE PATENTSCHRIFT

(11) **EP 2 994 653 B1**
(45) Veröffentlichungstag und Bekanntmachung des Hinweises auf die Patenterteilung: **27.06.2018**
(21) Anmeldenummer: 14739731.9
(22) Anmeldetag: 07.07.2014
(51) Int. Cl.: F16C 32/04

(54) **VERFAHREN ZUM KOMPENSIEREN EINER NIEDERFREQUENTEN STÖR-KRAFT EINES ROTORS MIT AKTIVEN MAGNETLAGERN, AKTIVES MAGNETLAGER MIT KOMPENSATIONS-REGEL-KREIS ZUR DURCHFÜHRUNG DES KOMPENSIERENS UND VERWENDUNG DES MAGNETLAGERS**
METHOD FOR COMPENSATING A LOW-FREQUENCY DISTURBANCE FORCE OF A ROTOR BY MEANS OF ACTIVE MAGNETIC BEARINGS, ACTIVE MAGNETIC BEARING HAVING A COMPENSATION CONTROL CIRCUIT FOR PERFORMING THE COMPENSATION, AND USE OF THE MAGNETIC BEARING
PROCÉDÉ PERMETTANT DE COMPENSER UNE FORCE PARASITE BASSE FRÉQUENCE D'UN ROTOR AU MOYEN DE PALIERS MAGNÉTIQUES ACTIFS, PALIER MAGNÉTIQUE ACTIF POURVU D'UN CIRCUIT DE RÉGLAGE DE COMPENSATION PERMETTANT DE METTRE EN UVRE CETTE COMPENSATION, ET UTILISATION DU PALIER MAGNÉTIQUE

(30) Priorität: 24.09.2013 DE 102013219196
(43) Veröffentlichungstag der Anmeldung: 16.03.2016
(73) Patentinhaber: Siemens Aktiengesellschaft, 80333 München (DE)
(72) Erfinder: WAGNER, Norbert, 46244 Bottrop (DE)
(86) Internationale Anmeldenummer: PCT/EP2014/064410
(87) Internationale Veröffentlichungsnummer: WO 2015/043785

(56) Entgegenhaltungen:
- EP-A2- 0 381 898
- EP-A2- 1 396 649
- US-A- 4 626 754
- US-A- 4 806 835
- US-A- 4 999 534

## Beschreibung

Die Erfindung betrifft ein Verfahren zum Kompensieren einer niederfrequenten mechanischen Stör-Schwingung, die in einem Rotor mit mindestens einem aktiven Magnetlager (magnetgelagerter Rotor) auftritt. Weiterhin betrifft die Erfindung ein aktives Magnetlager mit Kompensations-Regel-Kreis zur Durchführung des Kompensierens. Darüber hinaus wird eine Verwendung des aktiven Magnetlagers angegeben.

Ein aktives Magnetlager (AMB) wird beispielsweise bei einem Turboverdichter eingesetzt. Aufgrund der besonderen Eigenschaften von Turboverdichtern und der besonderen Eigenschaften der Magnetlager kann es zu folgendem Problem kommen: Je nach aerodynamischer Auslegung des Turboverdichters können in seinem spezifizierten Betriebsbereich durch aerodynamische Phänomene Störkräfte auf den Rotor ausgeübt werden, die inakzeptabel starke mechanische Schwingungen (Schwingungen mit hohen Schwingungs-Amplituden) zur Folge haben. Zum Schutz des Turboverdichters vor Beschädigung wird bei unzulässig starken mechanischen Schwingungen der Turboverdichter abgeschaltet.

Magnetlager weisen eine im Vergleich zu ölgeschmierten Lagern niedrigere Lagersteifigkeit auf. Eine relativ niedrige Lagersteifigkeit begünstigt das Auftreten mechanischer Schwingungen mit hohen Schwingungs-Amplituden. Dies trifft insbesondere bei Stör-Kräften mit niedriger Stör-Frequenz (AnregungsFrequenz) zu. So erfüllt zum Beispiel das bekannte Strömungs-Phänomen "rotating diffuser stall" die zuvor beschriebenen Bedingungen und kann bei Turboverdichtern mit Magnetlagern zu mechanischen Schwingungen mit unzulässig hohen Amplituden führen.

In der EP 0 381 898 A2 ist eine Anordnung und ein Verfahren beschrieben zur Reduzierung von Schwingungen an einem Fahmen, der eine Maschine mit einem Rotor trägt. Die EP 1 396 649 A2 betrifft eine magnetische Lagervorrichtung mit Schwingungserfassungsmittel für eine Schwingungsbegrenzungsfunktion. Aufgabe der vorliegenden Erfindung ist es, aufzuzeigen, wie das Auftreten unzulässig starker mechanischer Schwingungen in einem aktiven Magnetlager unterdrückt werden kann.

Zur Lösung der Aufgabe wird ein Verfahren zum Kompensieren mindestens einer niederfrequenten mechanischen Stör-Schwingung angegeben, die in einem Rotor eines aktiven Magnetlagers durch Einwirken einer Stör-Kraft auf den Rotor verursacht wird. Die mechanische Stör-Schwingung weist eine Stör-Schwingungs-Frequenz von unter 100 Hz. Das Verfahren weist folgende Verfahrensschritte auf:
a) Analysieren der niederfrequenten mechanischen Stör-Schwingung, die zu einem Stör-Kraft-Analyse-Ergebnis führt,
b) Bestimmen einer Kompensations-Kraft auf der Grundlage des Stör-Kraft-Analyse-Ergebnisses zum Erzeugen einer der mechanischen Stör-Schwingung entgegenwirkenden mechanischen Kompensations-Kraft im Rotor und
c) Erzeugen der der mechanischen Stör-Schwingung entgegenwirkenden mechanischen Kompensations-Schwingung im Rotor durch Einbringen der Kompensations-Kraft in den Rotor, wobei die Verfahrensschritte a), b) und c) mit Hilfe mindestens eines von einem Magnetlager-Regel-Kreis zum Regeln des aktiven Magnetlagers entkoppelten Kompensations-Regel-Kreises des aktiven Magnetlagers durchgeführt werden.

Zur Lösung der Aufgabe wird auch ein aktives Magnetlager mit einem Rotor, mindestens einem Magnetlager-Regel-Kreis zum Regeln des aktiven Magnetlagers und mindestens einem vom Magnetlager-Regel-Kreis entkoppelten Kompensations-Regel-Kreis zur Kompensation mindestens einer niederfrequenten mechanischen Stör-Schwingung angegeben. Die mechanische Stör-Schwingung kann in dem Rotor des aktiven Magnetlagers durch Einwirken einer Stör-Kraft auf den Rotor verursacht werden. Dabei weist die mechanische Stör-Schwingung eine Stör-Frequenz auf, die unterhalb der Dreh-Frequenz des Rotors liegt.

Mit Hilfe des Kompensations-Regel-Kreises wird die Amplitude der durch die Stör-Kraft im Rotor (Welle) hervorgerufenen mechanischen Stör-Schwingung reduziert. Dabei kann die mechanische Stör-Schwingung teilweise oder nahezu komplett ausgelöscht werden.

Eine maximale Amplitude A(ωₓ) der Stör-Schwingung mit der Stör-Frequenz ωₓ wird auf einen Wert unterhalb eines zulässigen Grenzwertes reduziert.

Beispielsweise ist die Stör-Kraft eine von außen einwirkende, aerodynamische Stör-Kraft. Bei einer solchen aerodynamischen Stör-Kraft handelt es sich um eine niederfrequente äußere Störung im Sinn einer "erzwungenen Schwingung". Die aerodynamische Stör-Kraft wirkt auf das Rotor/Lager-System und bewirkt im Rotor die mechanische Stör-Schwingung. Zur Kompensation dieser niederfrequenten Störung wird vorgeschlagen, über eine vom Magnetlager-Regel-Kreis unabhängige zusätzliche Ansteuerung des Magnetlagers Kompensations-Kräfte auf den Rotor aufzubringen, die den Stör-Kräften gezielt entgegenwirken und somit das Auftreten großer Schwingungs-Amplituden im Rotor verhindern. Für das gezielte Aufschalten der Kompensations-Kräfte wird ein geeigneter Algorithmus verwendet, der diese Kompensations-Kräfte nach Betrag, Phasenlage und Frequenz so berechnet, dass die Schwingungs-Amplituden im betreffenden Frequenzbereich reduziert werden.

Die grundlegende Idee der Erfindung besteht darin, für das Kompensieren bzw. das Dämpfen der Stör-Schwingung nicht den Magnetlager-Regel-Kreis, sondern einen separaten Kompensations-Regel-Kreis zu verwenden. Magnetlager-Regel-Kreis und Kompensations-Regel-Kreis sind voneinander entkoppelt, d.h. getrennt (separiert). Durch diese Trennung lässt sich eine nachteilige Auswirkung einer Kompensation der Stör-Schwingung reduzieren, ohne die Eigenschaften des Magnetlager-Regel-Kreises nachteilig zu beeinflussen.

Die Trennung bzw. Entkopplung von Magnetlager-Regel-Kreis und Kompensations-Regel-Kreis bedeutet dabei, dass durchaus vorhandene Elemente des Magnetlager-Regel-Kreises, z.B. Sensoren, Verstärker oder Aktoren und deren Ausgangsgrößen für den Kompensations-Regel-Kreis benutzt werden können.

Die Eigenschaften der Magnetlagerung tragen bei vorhandenen niederfrequenten Stör-Kräften maßgeblich zum Auftreten hoher (Wellen-)Schwingungen bei. Diese Eigenschaften der Magnetlagerung wiederum werden im Wesentlichen von der Auslegung des Magnetlager-Regel-Kreises bestimmt sowie von Dynamikeigenschaften verwendeter Hardware-Komponenten.

Bei der Auslegung des Magnetlager-Regel-Kreises muss für ein insgesamt akzeptables Verhalten des Gesamtsystems gesorgt werden. Dies gilt insbesondere im Hinblick auf Eigenschaften des Magnetlagers, u.a. eine Lagersteifigkeit des Magnetlager, im Dreh-Frequenzbereich von ca. 100 Hz bis ca. 1000 Hz, so dass eine alleinige Optimierung des Magnetlager-Regel-Kreises hinsichtlich maximaler Lagersteifigkeit im Stör-Frequenzbereich von ca. 1 Hz bis ca. 50 Hz nicht sinnvoll wäre.

Zur Optimierung der Auslegung des Magnetlager-Regel-Kreises werden häufig sogenannte Filterbausteine mit dem Ziel eingesetzt, in einem relativ engen Frequenzbereich eine Verstärkung eines elektrischen Regel-Kreis-Signals anzuheben oder abzusenken. Da sich aber durch Einbau von Filterbausteinen in einem Magnetlager-Regel-Kreis neben der Verstärkung bzw. Abschwächung eines Signals auch dessen Phasenlage ändert, haben derartige Filterbausteine nur begrenzte Einsatzmöglichkeiten im Hinblick auf das Erreichen eines insgesamt akzeptablen Verhaltens des Gesamtsystems. Mit der Erfindung kann auf den Einsatz von Filterbausteinen für den Magnetlager-Regel-Kreis zur Optimierung der Auslegung des Magnetlager-Regel-Kreises zumindest zum Teil verzichtet werden.

Es bietet sich an, das Verfahren während eines Betriebs des magnetischen Lagers in regelmäßigen zeitlichen Abständen oder auch ständig zu wiederholen bzw. durchzuführen. Durch das wiederholte bzw. ständige Durchführen des Verfahrens ist gewährleistet, dass unerwünscht starke mechanische Stör-Schwingungen im Rotor mit magnetischen Lagern während des Betriebs nicht auftreten. Gemäß einer besonderen Ausgestaltung werden daher die Verfahrensschritte a) und b) während einer Betriebsphase des Magnetlagers wiederholt durchgeführt.

Das Analysieren der niederfrequenten mechanischen Stör-Schwingung, das Bestimmen einer Kompensations-Kraft sowie das Erzeugen und Einbringen der der mechanischen Stör-Schwingung entgegenwirkenden mechanischen (bzw. elektromagnetischen) Kompensations-Kraft können prinzipiell mit Hilfe eines gemeinsamen Algorithmus durchgeführt werden. Vorteilhalft ist es aber, diese einzelnen Verfahrensschritte getrennt voneinander zu bearbeiten. Gemäß einer besonderen Ausgestaltung werden daher die Verfahrensschritte a), b) und/oder c) mit Hilfe unterschiedlicher Algorithmen durchgeführt. Denkbar ist auch, einen Algorithmus mit verschiedenen Teilen zur Bearbeitung der Verfahrensschritte a), b) und/oder c) einzusetzen.

Gemäß einer weiteren Ausgestaltung wird zum Analysieren der niederfrequenten Stör-Schwingung eine Frequenz-Analyse eines Zeitsignals einer Rotor-Auslenkung des Rotors durchgeführt. Die Frequenz-Analyse erfolgt insbesondere mit Hilfe von FFT (Fast Fourier Transformation).

Mit Hilfe des Verfahrens wird niederfrequente Stör-Schwingung kompensiert bzw. gedämpft. Dabei ist es grundsätzlich möglich, ein weites Frequenz-Spektrum abzudecken. Vorzugsweise wird die Frequenzanalyse für ein Frequenz-Spektrum (FrequenzBand) aus dem Frequenz-Bereich von 1 Hz bis 50 Hz und insbesondere aus dem Frequenz-Bereich von 1 Hz bis 30 Hz und nochmals insbesondere aus dem Frequenz-Bereich von 1 Hz bis 20 Hz durchgeführt. Stör-Schwingungen gerade aus diesen FrequenzBereichen können sehr hohe, nicht akzeptable Schwingungs-Amplituden hervorrufen. Mit der Erfindung werden solche hohen Schwingungs-Amplituden reduziert.

Für das Analysieren der Stör-Schwingung können verschiedene Schwingungs-Parameter der Stör-Schwingung sowie unterschiedliche Auswertungen der Schwingungs-Parameter herangezogen bzw. durchgeführt werden. Gemäß einer besonderen Ausgestaltung werden zum Analysieren der niederfrequenten Stör-Schwingung ein Ermitteln einer Stör-Amplitude Aₚ der Stör-Schwingung und ein Vergleichen der ermittelten Stör-Amplitude Aₚ und einer vorbestimmten Grenz-Amplitude Aₗᵢₘ durchgeführt. Die Amplituden entsprechen zum Beispiel einer radialen Auslenkung, des Rotors. Die radiale Auslenkung beträgt beispielsweise wenige pm.

Durch das Vergleichen der ermittelten Stör-Amplitude Aₚ und der vorbestimmten Grenz-Amplitude Aₗᵢₘ miteinander wird insbesondere festgestellt, ob die Stör-Amplitude Aₚ kleiner, gleich oder größer als die vorbestimmte Grenz-Amplitude Aₗᵢₘ ist. Das Vergleichen erfolgt beispielsweise durch Quotienten-Bildung aus der Stör-Amplitude Aₚ und der vorbestimmten Grenz-Amplitude Aₗᵢₘ.

Für den Fall, dass die Stör-Amplitude Aₚ gleich oder größer als die vorbestimmte Grenz-Amplitude Aₗᵢₘ ist, wird eine Ermittlung einer Phasenlage ϕ_{P} der Stör-Schwingung durchgeführt. Die ermittelte Phasenlage ϕ_{P} und/oder die Stör-Amplitude Aₚ sowie die Stör-Frequenz ωₓ der Stör-Schwingung werden als Eingangsgrößen für den Kompensations-Regel-Kreis verwendet. Phasenlage ϕ_{P} und/oder die Stör-Amplitude Aₚ werden zum Bestimmen der Kompensations-Kraft bzw. der Kompensations-Schwingung verwendet.

Das aktive Magnetlager kann in vielen Bereichen der Technik eingesetzt werden, und zwar insbesondere dort, wo eine schwingungsfreie Lagerung von empfindlichen Komponenten notwendig ist. Beispiele hierfür sind Magnet gelagerte Turbomaschinen, Ventilatoren, Kältemaschinen, Vakuumpumpen und Werkzeugspindeln.

Insbesondere findet das aktive Magnetlager in Turboverdichtern Anwendung. Gemäß einem weiteren Aspekt der Erfindung wird daher eine Verwendung des aktiven Magnetlagers in einem Turboverdichter (Turbokompressor) angegeben, wobei ein Rotor des Turboverdichters mit Hilfe des aktiven Magnetlagers gelagert wird.

Anhand eines Ausführungsbeispiels und der dazugehörigen Figur wird die Erfindung im Folgenden näher beschrieben.

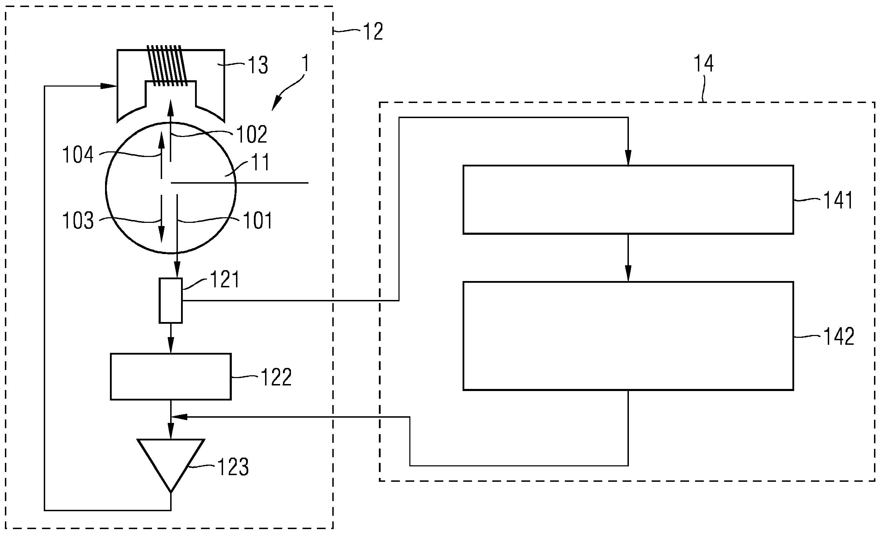

Die Figur zeigt schematisch ein aktives Magnetlager mit zugeordneten Regel-Kreisen.

Gegeben ist ein aktives Magnetlager 1 eines Turboverdichters. Das aktive Magnetlager 1 weist einen Rotor 11 sowie einen geschlossenen Magnetlager-Regel-Kreis 12 zum Regeln des aktiven Magnetlagers 1 auf.

Daneben ist ein vom Magnetlager-Regel-Kreis 12 entkoppelter Kompensations-Regel-Kreis 14 zur Kompensation einer niederfrequenten mechanischen Stör-Schwingung vorhanden, die in dem Rotor 11 des aktiven Magnetlagers 1 durch Einwirken einer Stör-Kraft 103 auf den Rotor 11 verursacht werden kann. Die mechanische Stör-Schwingung weist eine Stör-Frequenz unterhalb der Dreh-Frequenz des Rotors 11 auf.

Mit Hilfe des Stators (angedeutet durch den Elektromagneten 13) bildet sich das Magnetlager 1 aus. Der Rotor 11 wird mit Hilfe des Magnetlagers 1 im Stator 13 berührungslos gelagert (magnetgelagerter Rotor). Eine Regelung der berührungslosen Lagerung erfolgt durch den Magnetlager-Regel-Kreis 12. Komponenten des Magnetlager-Regel-Kreises 12 sind u.a. ein so genannter Displacement-Sensor (Positions-Sensor, Weg-Sensor) 121, der eine Lage-Änderung des Rotors 11 erfasst, sowie eine Kontroll-Einheit (Controller) 122 und ein Signalverstärker (Power amplifier) 123.

Im Betrieb des Magnetlagers 1 wirken auf den Rotor 11 verschiedene Kräfte. Diese Kräfte sind u.a. Gravitations-Kraft 101 und elektromagnetische Kraft 102. Gravitations-Kraft 101 und elektromagnetische Kraft 102 sind gemäß der Figur einander entgegen gerichtet.

Neben Gravitations-Kraft 101 und elektromagnetischer Kraft 102 kann auf den Rotor 11 eine äußere niederfrequente Stör-Kraft 103 wirken. Die Stör-Kraft 103 ist eine aerodynamische Stör-Kraft. Diese Stör-Kraft wirkt periodisch auf den Rotor 11 und verursacht dadurch im Rotor 11 eine mechanische niederfrequente Stör-Schwingung. Die niederfrequente Stör-Schwingung weist eine Stör-Frequenz ωₓ von unter 50 Hz auf.

Zur Kompensation der im Rotor 11 des aktiven Magnetlagers 1 durch Einwirken der Stör-Kraft 103 induzierten niederfrequenten Störkraft-Schwingung werden folgende Verfahrensschritte durchgeführt:
a) Analysieren der niederfrequenten mechanischen Stör-Schwingung, die zu einem Stör-Kraft-Analyse-Ergebnis führt,
b) Bestimmen einer Kompensations-Kraft 104 auf der Grundlage des Stör-Kraft-Analyse-Ergebnisses zum Erzeugen einer der mechanischen Stör-Schwingung entgegenwirkenden mechanischen Kompensations-Kraft im Rotor 11 und
c) Einbringen der Kompensations-Kraft 104 in den Rotor 11.

Dabei werden die Verfahrensschritte a), b) und c) mit Hilfe eines von einem Magnetlager-Regel-Kreis 12 zum Regeln des aktiven Magnetlagers 1 entkoppelten Kompensations-Regel-Kreises 14 des aktiven Magnetlagers 1 durchgeführt.

Für das Verfahren werden zwei Algorithmen bzw. ein Algorithmus mit zwei Teilen eingesetzt: Mit dem Teil 1 (Bezugszeichen 141) wird der Verfahrensschritt a) des Verfahrens realisiert. Es geht um das Erkennen hoher Auslenkungen im niedrigen Frequenzbereich.

Dazu umfasst das Analysieren der niederfrequenten mechanischen Schwingung eine Analyse des Spektrums im Bereich niedriger Frequenzen ω (ωₘᵢₙ < ω < ωₘₐₓ). ωₘᵢₙ beträgt zum Beispiel 1 Hz und ωₘₐₓ 50 Hz.

Zum Analysieren der niederfrequenten Störkraft-Schwingung wird eine Frequenzanalyse eines Zeitsignales der Rotor-Auslenkung (z.B. 20 pm) durchgeführt. Zur Frequenzanalyse wird FFT eingesetzt.

Mit Hilfe der Frequenzanalyse werden Stör-Amplituden Aₚₓ ermittelt. Durch das Vergleichen der ermittelten Stör-Amplituden Aₚₓ und der vorbestimmten Grenz-Amplitude Aₗᵢₘ wird festgestellt, ob die Stör-Amplitude Aₚₓ kleiner, gleich oder größer als die vorbestimmte Grenz-Amplitude Aₗᵢₘ sind. Es erfolgt eine Abfrage, ob Stör-Amplituden Aₚₓ größer als ein zulässiger Grenzwert Aₗᵢₘ sind.

Falls eine Stör-Amplitude Aₚ größer als der zulässige Grenzwert Aₗᵢₘ ist, werden folgende Verfahrensschritte durchgeführt:
i) Ermitteln von Phasenlage und Frequenz eines maximalen Betrages der Rotor-Auslenkung (der Stör-Schwingung) in dem untersuchten Frequenzbereich.
ii) Übergabe dieser Werte A(ωₓ) (Amplitude) und ϕ(ωₓ) (Phasenlage) bei Frequenz ωₓ an den Algorithmus Teil 2 (Bezugszeichen 142, siehe unten).

Falls die Stör-Amplituden Aₚₓ kleiner als ein zulässiger Grenzwert Aₗᵢₘ sind, wird keine weitere Aktion eingeleitet.

Die Verfahrensschritte i) und ii) werden während des Betriebs des Magnetlagers 1 wiederholt durchgeführt(rekursive Durchführung der Verfahrensschritte).

Gemäß Algorithmus Teil 2 wird ein Verfahren eingesetzt, das die im Frequenzbereich ωₘᵢₙ < ω < ωₘₐₓ ermittelte maximale Amplitude A(ωₓ) auf einen Wert unterhalb des zulässigen Grenzwertes Aₗᵢₘ reduziert.

Dazu wird die dafür notwendige Kompensations-Kraft 104 bestimmt. Zum Bestimmen der Kompensations-Kraft 104 wird eine Frequenz behaftete Magnet-Kraft f_{Komp}(ωₓ) und eine Phase ϕ_{f}(ωₓ) bei gleicher Frequenz ωₓ (entsprechend der Stör-Schwingungs-Frequenz) ermittelt.

Die so bestimmte Magnet-Kraft wird den Stellgrößen des Kompensations-Regel-Kreises übergeben und dem Verstärker 123 aufgeschaltet. Über den Elektromagneten 13 wird schließlich die Kompensations-Kraft 104 als mechanische Kompensations-Schwingung in den Rotor 11 eingebracht. Die eingebrachte mechanische Kompensations-Schwingung ist der mechanischen Stör-Schwingung entgegen gerichtet und führt zur Dämpfung der mechanischen Stör-Schwingung.

Verwendung finden das aktive Magnetlager sowie das Verfahren zum Kompensieren niederfrequenter mechanischer Schwingungen in einem Turboverdichter.

## Patentansprüche

1. Verfahren zum Kompensieren mindestens einer niederfrequenten mechanischen Stör-Schwingung, die in einem Rotor (11) mit mindestens einem aktiven Magnetlager (1) durch Einwirken einer Stör-Kraft (103) auf den Rotor (11) verursacht wird, wobei das aktive Magnetlager (1) einen Magnetlager-Regel-Kreis (12) aufweist, umfassend einen Displacement-Sensor (121), der eine Lage-Änderung des Rotors (11) erfasst, sowie eine Kontroll-Einheit (122) und einen Signalverstärker (123),
wobei die mechanische Stör-Schwingung im Rotor (11) mit einer Stör-Schwingungs-Frequenz unterhalb einer Dreh-Frequenz des Rotors (11) auftritt, mit folgenden Verfahrensschritten:
a) Analysieren der niederfrequenten mechanischen Stör-Schwingung aus einer Frequenzanalyse eines Zeitsignals der Rotor-Auslenkung, die zu einem Stör-Kraft-Analyse-Ergebnis führt,
b) Bestimmen einer Kompensations-Kraft (104) auf der Grundlage des Stör-Kraft-Analyse-Ergebnisses zum Erzeugen einer der mechanischen Stör-Schwingung entgegenwirkenden mechanischen Kompensations-Kraft im Rotor (11) und
c) Einbringen der Kompensations-Kraft in den Rotor (11), wobei
die Verfahrensschritte a), b) und c) mit Hilfe mindestens eines von einem Magnetlager-Regel-Kreis (12) zum Regeln des aktiven Magnetlagers (1) entkoppelten Kompensations-Regel-Kreises(14) des aktiven Magnetlagers (1) durchgeführt werden.

2. Verfahren nach Anspruch 1, wobei die Verfahrensschritte a) und b) während einer Betriebs-Phase des Magnetlagers (1) wiederholt durchgeführt werden.

3. Verfahren nach Anspruch 1 oder 2, wobei die Verfahrensschritte a), b) und/oder c) mit Hilfe unterschiedlicher Algorithmen (141, 142) durchgeführt werden.

4. Verfahren nach einem der Ansprüche 1 bis 3, wobei zum Analysieren der niederfrequenten Stör-Schwingung eine Frequenz-Analyse eines Zeitsignals einer Rotor-Auslenkung des Rotors durchgeführt wird.

5. Verfahren nach Anspruch 4, wobei die Frequenz-Analyse mit Hilfe Fast Fourier Transformation durchgeführt wird.

6. Verfahren nach Anspruch 4 oder 5, wobei die Frequenz-Analyse für ein Frequenz-Spektrum aus dem Frequenz-Bereich von 1 Hz bis 50 Hz, insbesondere aus dem Frequenz-Bereich von 1 Hz bis 30 Hz und nochmals insbesondere aus dem Frequenzbereich von 1 Hz bis 20 Hz durchgeführt wird.

7. Verfahren nach einem der Ansprüche 1 bis 6, wobei zum Analysieren der niederfrequenten Stör-Schwingung ein Ermitteln einer Stör-Amplitude Aₚ der Stör-Schwingung und ein Vergleichen der ermittelten Stör-Amplitude Aₚ und einer vorbestimmten Grenz-Amplitude Aₘₐₓ durchgeführt werden.

8. Verfahren nach Anspruch 7, wobei durch das Vergleichen der ermittelten Stör-Amplitude Aₚ und der vorbestimmten Grenz-Amplitude Aₗᵢₘ festgestellt wird, ob die Stör-Amplitude Aₚ kleiner, gleich oder größer als die vorbestimmte Grenz-Amplitude Aₗᵢₘ ist, und für den Fall, dass die Stör-Amplitude Aₚ gleich oder größer als die vorbestimmte Grenz-Amplitude Aₗᵢₘ ist, eine Ermittlung einer Phasenlage ϕ_{P} der Stör-Schwingung durchgeführt und die ermittelte Phasenlage ϕ_{P} und/oder die Stör-Amplitude Aₚ als Eingangsgrößen für den Kompensations-Regel-Kreis verwendet werden.

9. Aktives Magnetlager (1) mit
- einem Rotor (11),
- mindestens einem Magnetlager-Regel-Kreis (12) zum Regeln des aktiven Magnetlagers (1) wobei der Magnetlager-Regel-Kreis (12) einen Displacement-Sensor (121) umfasst, der eine Lage-Änderung des Rotors (11) erfasst, sowie eine Kontroll-Einheit (122) und einen Signalverstärker (123), und mit
- mindestens einem vom Magnetlager-Regel-Kreis (12) entkoppelten Kompensations-Regel-Kreis (14) zur Kompensation mindestens einer niederfrequenten mechanischen Stör-Schwingung, die in dem Rotor (11) des aktiven Magnetlagers (1) durch Einwirken einer Stör-Kraft (103) auf den Rotor (11) verursacht werden kann, wobei
- die mechanische Stör-Schwingung eine Stör-Frequenz unterhalb einer Dreh-Frequenz des Rotors (11) aufweist.

10. Verwendung des aktiven Magnetlagers nach Anspruch 9 in einem Turboverdichter, wobei ein Rotor des Turboverdichters mit Hilfe des aktiven Magnetlagers gelagert wird.

## Claims

1. Method for compensating for at least one low-frequency mechanical disturbing vibration which is caused in a rotor (11) having at least one active magnetic bearing (1) by virtue of a disturbing force (103) acting on the rotor (11),
wherein the active magnetic bearing (1) has a magnetic bearing control loop (12) comprising a displacement sensor (121), which captures a position change of the rotor (11), and a control unit (122) and a signal amplifier (123),
wherein the mechanical disturbing vibration in the rotor (11) occurs at a disturbing vibration frequency below a rotational frequency of the rotor (11), having the following method steps of:
a) analysing the low-frequency mechanical disturbing vibration from a frequency analysis of a time signal of the rotor deflection which leads to a disturbing force analysis result,
b) determining a compensation force (104) on the basis of the disturbing force analysis result in order to generate a mechanical compensation force which counteracts the mechanical disturbing vibration in the rotor (11), and
c) introducing the compensation force into the rotor (11),
wherein
method steps a), b) and c) are carried out with the aid of at least one compensation control loop (14) of the active magnetic bearing (1), which compensation control loop is decoupled from a magnetic bearing control loop (12) for controlling the active magnetic bearing (1).

2. Method according to Claim 1, wherein method steps a) and b) are carried out repeatedly during an operating phase of the magnetic bearing (1).

3. Method according to Claim 1 or 2, wherein method steps a), b) and/or c) are carried out with the aid of different algorithms (141, 142).

4. Method according to one of Claims 1 to 3, wherein a frequency analysis of a time signal of a rotor deflection of the rotor is carried out in order to analyse the low-frequency disturbing vibration.

5. Method according to Claim 4, wherein the frequency analysis is carried out with the aid of a fast Fourier transform.

6. Method according to Claim 4 or 5, wherein the frequency analysis is carried out for a frequency spectrum from the frequency range of 1 Hz to 50 Hz, in particular from the frequency range of 1 Hz to 30 Hz, and once more in particular from the frequency range of 1 Hz to 20 Hz.

7. Method according to one of Claims 1 to 6, wherein, in order to analyse the low-frequency disturbing vibration, a disturbing amplitude Aₚ of the disturbing vibration is determined and the determined disturbing amplitude Aₚ and a predetermined limit amplitude Aₘₐₓ are compared.

8. Method according to Claim 7, wherein it is determined whether the disturbing amplitude Aₚ is less than, equal to or greater than the predetermined limit amplitude Aₗᵢₘ by comparing the determined disturbing amplitude Aₚ and the predetermined limit amplitude Aₗᵢₘ and, if the disturbing amplitude Aₚ is greater than or equal to the predetermined limit amplitude Aₗᵢₘ, a phase angle ϕₚ of the disturbing vibration is determined and the determined phase angle ϕₚ and/or the disturbing amplitude Aₚ is/are used as input variables for the compensation control loop.

9. Active magnetic bearing (1) having
- a rotor (11),
- at least one magnetic bearing control loop (12) for controlling the active magnetic bearing (1), wherein the magnetic bearing control loop (12) comprises a displacement sensor (121), which captures a position change of the rotor (11), and a control unit (122) and a signal amplifier (123), and having
- at least one compensation control loop (14) which is decoupled from the magnetic bearing control loop (12) and is intended to compensate for at least one low-frequency mechanical disturbing vibration which can be caused in the rotor (11) of the active magnetic bearing (1) as a result of a disturbing force (103) acting on the rotor (11), wherein
- the mechanical disturbing vibration has a disturbing frequency below a rotational frequency of the rotor (11).

10. Use of the active magnetic bearing according to Claim 9 in a turbo compressor, wherein a rotor of the turbo compressor is mounted with the aid of the active magnetic bearing.

## Revendications

1. Procédé de compensation d'au moins une oscillation perturbatrice mécanique de basse fréquence, qui est provoquée dans un rotor (11), ayant au moins un palier (1) magnétique actif, par l'application d'une force (103) perturbatrice au rotor (11), dans lequel le palier (1) magnétique actif a un circuit (12) de régulation du palier magnétique, comprenant un capteur (121) de déplacement, qui détecte une modification de la position du rotor (11), ainsi qu'une unité (122) de contrôle et un amplificateur (123) de signal,
dans lequel l'oscillation perturbatrice mécanique dans le rotor (11) se produit à une fréquence d'oscillation perturbatrice en dessous d'une fréquence de rotation du rotor (11), comprenant les stades de procédé suivant :
a) analyse de l'oscillation perturbatrice mécanique de basse fréquence, à partir d'une analyse de fréquence d'un signal de temps de l'excursion du rotor, qui donne un résultat d'analyse de la force perturbatrice,
b) détermination d'une force (104) de compensation sur la base du résultat de l'analyse de la force perturbatrice pour produire, dans le rotor (11), une force de compensation mécanique s'opposant à l'oscillation perturbatrice et
c) application de la force de compensation au rotor (11), dans lequel
on effectue les stades a), b) et c) du procédé à l'aide d'au moins un circuit (14) de régulation de la compensation du palier (1) magnétique actif, découplé d'un circuit (12) de régulation du palier magnétique pour réguler le palier (1) magnétique actif.

2. Procédé suivant la revendication 1, dans lequel on effectue les stades a) et b) du procédé, de manière répétée, pendant une phase de fonctionnement du palier (1) magnétique.

3. Procédé suivant la revendication 1 ou 2, dans lequel on effectue les stades a), b) et/ou c) du procédé à l'aide d'algorithmes (141, 142) différents.

4. Procédé suivant l'une des revendications 1 à 3, dans lequel, pour analyser l'oscillation perturbatrice de basse fréquence, on effectue une analyse de fréquence d'un signal de temps d'une excursion du rotor.

5. Procédé suivant la revendication 4, dans lequel on effectue une analyse de fréquence à l'aide d'une transformation de Fourier rapide.

6. Procédé suivant la revendication 4 ou 5, dans lequel on effectue l'analyse de fréquence pour un spectre de fréquence dans la plage de fréquence allant de 1 Hz jusqu'à 50 Hz, notamment dans la plage de fréquence allant de 1 Hz jusqu'à 30 Hz et même notamment dans la plage de fréquence allant de 1 Hz jusqu'à 20 Hz.

7. Procédé suivant l'une des revendications 1 à 6, dans lequel, pour analyser l'oscillation perturbatrice de basse fréquence, on effectue une détermination d'une amplitude Aₚ perturbatrice de l'oscillation perturbatrice et une comparaison de l'amplitude Aₚ perturbatrice déterminée à une amplitude Aₘₐₓ limite définie à l'avance.

8. Procédé suivant la revendication 7, dans lequel, par la comparaison de l'amplitude Aₚ perturbatrice déterminée et de l'amplitude Aₗᵢₘ limite définie à l'avance, on constate si l'amplitude Aₚ perturbatrice est inférieure, égale ou supérieure à l'amplitude Aₗᵢₘ limite définie à l'avance et, dans le cas où l'amplitude Aₚ perturbatrice est supérieure ou égale à l'amplitude Aₗᵢₘ limite définie à l'avance, on effectue une détermination d'une position ϕₚ de phase de l'oscillation perturbatrice et l'on utilise la position ϕₚ de phase déterminée et/ou l'amplitude Aₚ perturbatrice comme grandeur d'entrée pour le circuit de régulation de compensation.

9. Palier (1) magnétique actif, comprenant
- un rotor (11),
- au moins un circuit (12) de régulation du palier magnétique pour réguler le palier (1) magnétique actif, le circuit (12) de régulation du palier magnétique comprenant un capteur (121) de déplacement, qui détecte une modification de la position du rotor (11), ainsi qu'une unité (122) de contrôle et un amplificateur (123) du signal, et comprenant
- au moins un circuit (14) de régulation de compensation, découplé du circuit (12) de régulation du palier magnétique, pour la compensation d'au moins une oscillation perturbatrice mécanique de basse fréquence, qui peut être provoquée dans le rotor (11) du palier (1) magnétique actif par application d'une force (103) perturbatrice au rotor (11), dans lequel
- l'oscillation perturbatrice mécanique a une fréquence perturbatrice inférieure à une fréquence de rotation du rotor (11).

10. Utilisation du palier magnétique actif suivant la revendication 9, dans un turbocompresseur, un rotor du turbocompresseur étant supporté à l'aide du palier magnétique actif.
